# EUROPEAN PATENT APPLICATION

(11) **EP 4 472 204 A1**
(43) Date of publication of application: **04.12.2024**
(21) Application number: 23794784.1
(22) Date of filing: 08.03.2023
(51) Int. Cl.: H04N 19/42

(54) **VIDEO FRAME PROCESSING METHOD AND DEVICE, AND VIDEO SYSTEM, MEDIUM AND CHIP**

(30) Priority: 29.04.2022 CN 202210476236
(71) Applicant: Huawei Technologies Co., Ltd., Shenzhen, Guangdong 518129 (CN)
(72) Inventor: ZHANG, Yixuan, Shenzhen, Guangdong 518129 (CN); CHEN, Shaolin, Shenzhen, Guangdong 518129 (CN); WU, Yifan, Shenzhen, Guangdong 518129 (CN)
(74) Representative: Goddar, Heinz J.
(86) International application number: PCT/CN2023/080277
(87) International publication number: WO 2023/207348

(57) **Abstract**

This application provides a video frame processing method and device, a video system, a medium, and a chip, to reduce or avoid occurrence of image tearing. The video frame processing method includes: detecting whether a first video frame is a scene switching frame; and if the first video frame is the scene switching frame, keeping displaying a second video frame, and after determining that the first video frame meets a preset display condition, switching from displaying the second video frame to displaying the first video frame, where the second video frame is a video frame that is last displayed before a bitstream of the first video frame is received.

## Description

### CROSS-REFERENCE TO RELATED APPLICATION

This application claims priority to Chinese Patent Application No. 202210476236.7, filed with the China National Intellectual Property Administration on April 29, 2022 and entitled "VIDEO FRAME PROCESSING METHOD AND DEVICE, VIDEO SYSTEM, MEDIUM, AND CHIP", which is incorporated herein by reference in its entirety.

### TECHNICAL FIELD

This application relates to video transmission and display technologies, and in particular, to a video frame processing method and device, a video system, a medium, and a chip.

### BACKGROUND

In the field of video coding, a scalable video coding (scalable video coding, SVC) technology is often applied to a scenario of short-distance video transmission. A bitstream generated based on the SVC technology generally includes a base layer (base layer, BL) and another enhancement layer (enhancement layer, EL) that can improve a resolution, a frame rate, and quality. It can be learned that the bitstream is a multi-layer bitstream.

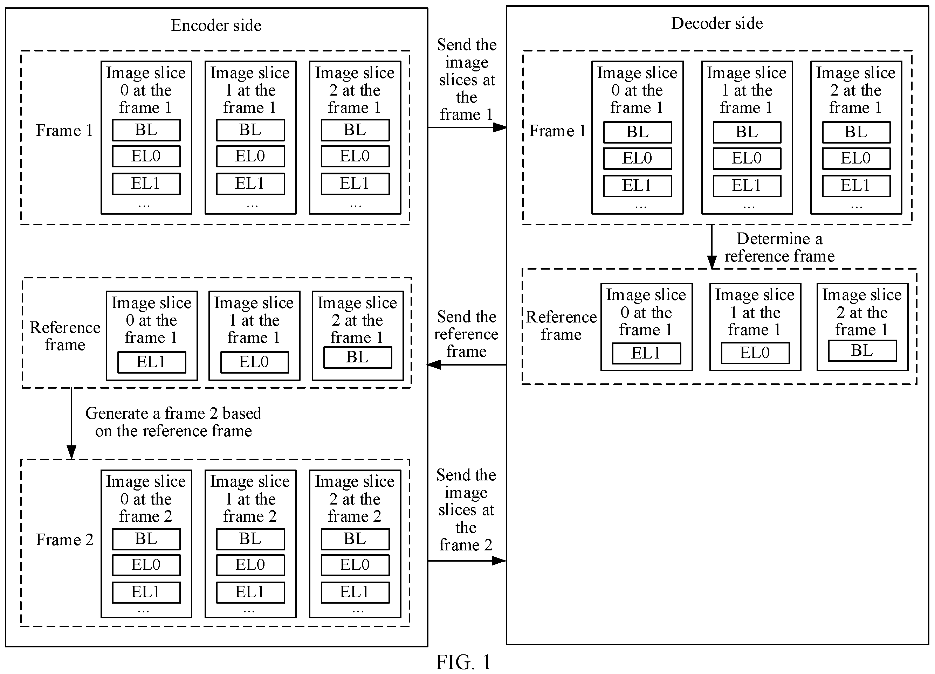

FIG. 1 is a diagram of an SVC bitstream transmission process. In a process of encoding each frame of image, an encoder side may encode a next frame of image based on a reference frame in an inter coding scheme. When encoding each frame of image, the encoder side segments the frame of image into a plurality of image slices that are denoted as a slice 0, a slice 1, and a slice 2. For example, after receiving image slices of a frame 1, a decoder side may feed back a reference frame to the encoder side, so that the encoder side encodes a next frame of the frame 1, namely, a frame 2, based on the fed-back reference frame.

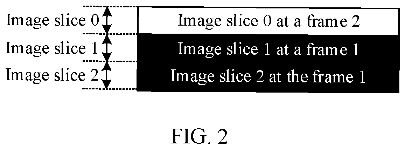

A case in which two adjacent frames of images in a video greatly differ means that scene switching occurs. For example, the frame 2 is the next frame of the frame 1. In addition, an image at the frame 2 greatly differs from an image at the frame 1. In this case, the frame 2 may be considered as a scene switching frame. Each time the decoder side receives an image slice at the frame 2, the decoder side immediately performs decoding and other processing. For example, after receiving a slice 0 at the frame 2, the decoder decodes, reconstructs, and sends the slice 0 at the frame 2 for display. Refer to FIG. 2. A position of a slice 0 in an image displayed after the slice 0 is sent for display corresponds to the image at the frame 2, and positions of a slice 1 and a slice 2 in the displayed image both correspond to images at the frame 1. Because the frame 2 is the scene switching frame, and the image at the frame 2 greatly differs from the image at the frame 1, when the displayed image includes both the slice at the frame 2 and the slices at the frame 1, image fragmentation (tearing) occurs.

### SUMMARY

This application provides a video frame processing method and device, a video system, a medium, and a chip, to reduce or avoid occurrence of image tearing.

According to a first aspect, an embodiment of this application provides a video frame processing method. The method may be performed by a decoder side or a decoding device. The decoding device may receive a video sent by an encoding device. Currently, the decoding device immediately displays an image slice of a received video frame after receiving the video frame. In a scenario in which the video frame is a scene switching frame, image tearing occurs. To resolve this problem, in the video frame processing method provided in embodiments of this application, for ease of description, the encoding device is denoted as a first device, and the decoding device is denoted as a second device. The second device may determine, through detection, whether a first video frame is a scene switching frame. If the first video frame is the scene switching frame, the second device may perform, on the first video frame, a display operation corresponding to the scene switching frame. For example, displaying of a second video frame is kept, where the second video frame is a video frame that is last displayed before the second device receives a bitstream of the first video frame. In such a design, it can be ensured that after receiving the first video frame, the second device does not immediately display all or some of image units in the first video frame, to avoid a case in which image units in the second video frame and the image units in the first video frame both appear in a display interface. Therefore, image tearing is reduced or avoided. After determining that the first video frame meets a preset display condition, the second device may switch from displaying the second video frame to displaying the first video frame.

In a possible design, the second device may determine a histogram difference between a previous frame of the first video frame and the first video frame, to determine whether the first video frame is the scene switching frame.

In a possible design, the second device may detect whether received indication information includes a first identifier, to detect whether the first video frame is the scene switching frame. The second device may receive the indication information in a process of performing the video frame processing method. The first device may send the indication information in a plurality of manners. The indication information may include the first identifier, where the first identifier indicates whether the first video frame is the scene switching frame. The indication information may be in the bitstream of the first video frame. The first device may send the bitstream, carrying the indication information, of the first video frame to the second device. Alternatively, the indication information may be in a target bitstream, where the target bitstream is a bitstream that is last received by the second device before the second unit receives the bitstream of the first video frame. The first device may send the target bitstream, carrying the indication information, to the second device. The second device may detect whether the indication information includes the first identifier. If the indication information includes the first identifier, the second device may determine that the first video frame is the scene switching frame. If the indication information does not include the first identifier, it may indicate that the first video frame is not the scene switching frame. If the indication information includes the first identifier, the second device may perform, on the first video frame, the display operation corresponding to the scene switching frame.

To enable the second device to determine, before displaying the first video frame, whether the first video frame is the scene switching frame, in a possible design, the first video frame includes at least one image unit arranged in order, a target image unit is the initial image unit in the first video frame, and the indication information is in a bitstream of the target image unit.

In a possible design, the target image unit is an image slice (slice) or an image tile (tile); or the target image unit includes a plurality of image blocks. The plurality of image blocks may be a group of image blocks (for example, a macroblock in H.264 and a largest coding block in H.265).

In a possible design, the indication information is in header information of base layer image data of the bitstream of the target image unit, where the header information is at a network abstraction layer corresponding to the bitstream of the target image unit.

In a possible design, the header information is in header information of the network abstraction layer; or the header information is in a subject of the network abstraction layer and is in slice header information of the target image unit.

In a possible design, timing of a target bitstream is later than timing of a bitstream of the second video frame. The second video frame is a video frame last displayed by the second device, and the target bitstream may be a bitstream received by the second device after the second device receives the bitstream of the second video frame. Alternatively, after sending the bitstream of the second video frame and before sending the bitstream of the first video frame, the first device may send the target bitstream, to indicate whether the first video frame is the scene switching frame.

In a possible design, to ensure a display effect of the first video frame, for example, image quality, a display speed, and the like, the display condition includes one or both of the following: determining that bitstreams of all image units in the first video frame are received; or determining that the first video frame meets a quality condition.

In a possible design, the quality condition includes one or both of the following: in the received bitstreams of all the image units in the first video frame, an amount of enhancement layer image data included in a bitstream of each of the image units is greater than or equal to a preset amount threshold; or a bitstream of each of the image units includes at least one quantization parameter, and the quantization parameter is less than a preset parameter threshold.

In a possible design, if the indication information includes the first identifier, after determining that the first video frame meets the preset display condition, the second device may not display the first video frame, and directly display an image unit in a third video frame. The third video frame may be a video frame currently received by the second device. The second device may directly display the image unit that is of the third video frame and that is being decoded.

In a possible design, the second device may further perform the following operation: if the indication information does not include the first identifier, after receiving a bitstream of any image unit in the first video frame, displaying a reconstructed image of the any image unit based on the bitstream of the any image unit. In this embodiment of this application, when the first video frame is not the scene switching frame, the second device may decode and display the image unit after receiving the bitstream of the any image unit in the first video frame.

In a possible design, if the indication information includes the first identifier, the second device may further perform the following operation: performing the following operation for the bitstream of the any image unit in the first video frame: after determining that the bitstream of the any image unit meets a feedback condition, sending feedback information corresponding to the any image unit, where the feedback condition is that an amount of enhancement layer image data included in the bitstream of the any image unit is greater than or equal to the preset amount threshold.

According to a second aspect, an embodiment of this application provides a video frame processing method. The method may be performed by an encoder side or an encoding device. The encoding device may send a video to a decoding device. The video frame processing method provided in this embodiment of this application may be applied to any frame in a video. For ease of description, the encoding device is denoted as a first device, and the decoding device is denoted as a second device. In a process of performing the video frame processing method, the first device may determine whether a to-be-processed first video frame is a scene switching frame. If the first video frame is the scene switching frame, indication information is sent, where the indication information includes a first identifier, and the first identifier indicates that the first video frame is the scene switching frame.

In a possible design, the indication information is in a bitstream of the first video frame, or the indication information is in a target bitstream, and the target bitstream is a bitstream that is last sent before the bitstream of the first video frame is sent.

In a possible design, the first video frame includes at least one image unit arranged in order, a target image unit is the initial image unit in the first video frame, and the indication information is in a bitstream of the target image unit.

In a possible design, the image unit is an image slice (slice) or an image tile (tile); or the image unit includes a plurality of image blocks.

In a possible design, header information of base layer image data of the bitstream of the target image unit includes the indication information, where the header information is at a network abstraction layer corresponding to the bitstream of the target image unit.

In a possible design, the header information is in header information of the network abstraction layer; or the header information is in a subject of the network abstraction layer and is in slice header information of the target image unit.

In a possible design, if the first video frame is the scene switching frame, a bitstream of each image unit in the first video frame includes base layer image data and a first amount of enhancement layer image data, where the first amount is preset; or if the first video frame is not the scene switching frame, a bitstream of each image unit includes base layer image data and a second amount of enhancement layer image data, where the second amount is determined based on channel quality.

In this embodiment of this application, a bitstream of the scene switching frame includes the first amount of enhancement layer image data, so that a transmission failure of the scene switching frame caused by poor channel quality can be avoided, a transmission success rate of the scene switching frame can be improved as much as possible, and display quality of the scene switching frame can be ensured.

In a possible design, when the indication information is in a bitstream of the first video frame, the first device sends the indication information, that is, a process in which the first device sends the bitstream of the first video frame maybe as follows: sending a bitstream of a first image unit, where in any two image units that are adjacent in order in the arrangement, a former image unit is the first image unit, and a latter image unit is a second image unit; and sending a bitstream of the second image unit if first feedback information corresponding to the first image unit is detected, where the first feedback information represents that an amount of enhancement layer image data included in the bitstream that is of the first image unit and that is received by a receive end is greater than or equal to a preset amount threshold.

In this embodiment of this application, that the first device receives the feedback information that is of the first image unit and that is sent by the second device may reflect: The bitstream of the first image unit may be received and displayed by the second device, for example, meet a quality requirement, a display requirement, or the like of the second device for the image unit.

In a possible design, to enable the first video frame to be received by the second device, the first device may further perform the following operations: if the first feedback information is not detected within preset duration since the bitstream of the first image unit is sent, repeatedly sending the bitstream of the first image unit until the first feedback information is detected; or if the first feedback information is not detected within preset duration since the bitstream of the first image unit is sent, sending the bitstream of the second image unit; and resending the bitstream of the first image unit after a bitstream of the last image unit in the first video frame is sent.

According to a third aspect, an embodiment of this application provides a video frame processing device, including a processor and a memory coupled to the processor. The memory may be configured to store program code. The processor may invoke the program code stored in the memory to perform the method in the first aspect and any possible design of the first aspect, or perform the method in the second aspect and any possible design of the second aspect.

According to a fourth aspect, an embodiment of this application provides a video system, where the video system may include a first device and a second device. The first device may perform the method in the first aspect and any possible design of the first aspect. The second device may perform the method in the second aspect and any possible design of the second aspect.

According to a fifth aspect, an embodiment of this application further provides a computer-readable storage medium. The computer-readable storage medium stores a computer program. When the computer program is executed by a computer, the computer is enabled to perform the method in the first aspect and any possible design of the first aspect, or perform the method in the second aspect and any possible design of the second aspect.

According to a sixth aspect, an embodiment of this application further provides a chip. The chip is configured to read a computer program stored in a memory, to perform the method in the first aspect and any possible design of the first aspect, or perform the method in the second aspect and any possible design of the second aspect.

According to a seventh aspect, an embodiment of this application further provides a chip system. The chip system includes a processor, configured to support a computer apparatus in implementing the method in the first aspect and any possible design of the first aspect, or the method in the second aspect and any possible design of the second aspect. In a possible design, the chip system further includes a memory, and the memory is configured to store a program and data that are necessary for the computer apparatus. The chip system may include a chip, or may include a chip and another discrete component.

For technical effects that can be achieved in any one of the second aspect to the seventh aspect, refer to descriptions of technical effects that can be achieved by the first aspect and any possible design of the first aspect. Repeated parts are not described.

### BRIEF DESCRIPTION OF DRAWINGS

FIG. 1 is a diagram of a video frame transmission process;
FIG. 2 is a diagram of image tearing;
FIG. 3 is a diagram of a video frame processing process;
FIG. 4 is a diagram of a video system according to an embodiment of this application;
FIG. 5 is a schematic flowchart of a video frame processing method according to an embodiment of this application;
FIG. 6 is a diagram of a manner of sending an indication message;
FIG. 7 is a schematic flowchart of a video frame processing method according to an embodiment of this application;
FIG. 8 is a schematic flowchart of a video frame processing method according to an embodiment of this application;
FIG. 9 is a diagram of interaction between a first device and a second device according to an example embodiment;
FIG. 10 is a diagram of a structure of a video frame processing device according to an embodiment of this application; and
FIG. 11 is another diagram of a structure of a video frame processing device according to an embodiment of this application.

### DESCRIPTION OF EMBODIMENTS

As popularity of terminals increases, and computing capabilities of mobile terminals improve, scenario demands for information sharing between the terminals are increasing, for example, information sharing in an office scenario, such as display content sharing, image sharing, and video sharing; for another example, switching between a large-screen terminal and a small-screen terminal for display in a home entertainment scenario, such as switching a video display terminal, or switching a video display image.

Generally, during information sharing between the terminals, shared content is transmitted in a wired communication manner. This manner is relatively inconvenient. Based on this, a short-distance (short-range) wireless projection technology is proposed. The short-range wireless projection technology may be a whole set of technologies in which video data generated by a terminal having a strong processing capability is decoded and compressed, and is sent, in a wireless transmission manner, to a terminal having a weak processing capability and a good display capability for display. In some virtual reality (virtual reality, VR) scenarios, a picture (namely, video data) rendered by a graphics processing unit (graphics processing unit, GPU) in a host is decoded and compressed, and is sent, in the wireless transmission manner, to a television or a VR terminal such as a VR helmet. In the short-range wireless projection technology, the video data may be transmitted based on wireless transmission technologies such as wireless fidelity (wireless fidelity, Wi-Fi), Bluetooth, and ZigBee. In this application, descriptions are provided by using the Wi-Fi technology as an example.

Some short-range wireless projection application scenarios, such as game projection and VR glasses application, have interaction demands. Therefore, a delay is required to be extremely low in an image transmission process. Wi-Fi wireless channels are susceptible to a plurality of factors such as an environment, noise, and interference signals. As a result, transmission bandwidth is unstable, data may be lost, and quality of a displayed image is poor. An SVC technology is proposed to improve an anti-interference capability. In the SVC technology, an encoder side may divide a frame of image into a plurality of image slices, and each image slice may be encoded into a bitstream having a plurality of layers of data. When channel bandwidth is high, a decoder side may receive bitstreams of more image slices, that is, receive more image slices, so that quality of a reference frame can be improved, thereby improving quality of a reconstructed image.

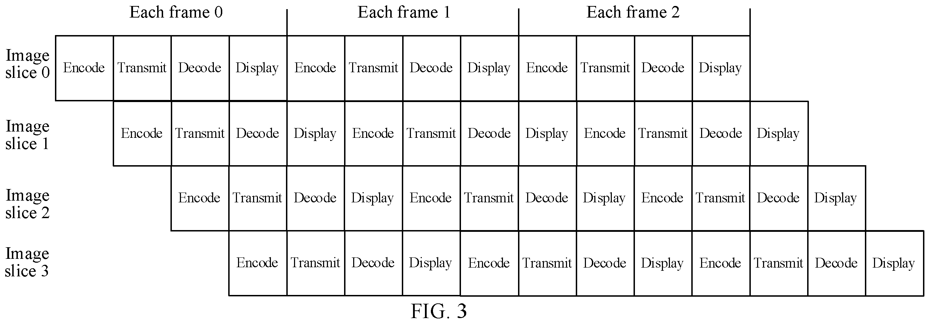

Video transmission is actually transmission of a plurality of frames of images. FIG. 3 is a diagram of a process of video transmission based on an SVC technology. This process may be referred to as a sub-frame-level pipeline processing manner. Each frame (Frame) of image may be divided into a same quantity of image units. The image unit may be one or more of an image slice, an image tile, a pixel, a tile, or a block. For ease of description, the following uses an example in which each frame of image may be divided into a same quantity of image slices for description. As shown in FIG. 3, each frame of image may be divided into four image slices. For example, a frame 0 is divided into a slice 0, a slice 1, a slice 2, and a slice 4. A processing process for the frame 0 is used as an example. An encoder side may encode the slice 0 at the frame 0 and then transmit an encoded slice 0 to a decoder side. The decoder side receives a bitstream of the slice 0 at the frame 0, decodes the bitstream, and then displays the slice 0 at the frame 0. In a process in which the encoder side may encode the slice 0 at the frame 0 and then transmit the encoded slice 0 to the decoder side, the encoder side may continue to encode the slice 1 at the frame 0, and then transmit an encoded slice 1 to the decoder side. The decoder side decodes and displays the slice 1. In this manner, the four slices at the frame 0 may be sequentially encoded, transmitted, decoded, and displayed, so that a delay is low. In this process, after being decoded, each image slice is immediately sent for display.

In a plurality of transmitted frames of images, two adjacent frames of images may be the same or similar, or may greatly differ. A large difference between the two adjacent frames of images may reflect a large difference in content between the two frames of images. For example, the two frames of images display (belong to) different scenarios, or different objects are displayed in the two frames of images. Generally, a case in which two adjacent frames of images greatly differ may mean that scene switching occurs. If there is a large difference between the two adjacent frames of images, a frame whose timing is later in the two frames may be referred to as a scene switching frame.

For example, a frame 1 and a frame 2 are two adjacent frames, and the frame 2 is a next frame of the frame 1. If an image at the frame 2 greatly differs from an image at the frame 1, the frame 2 may be considered as the scene switching frame. Generally, a scene switching detection method may be used to determine whether a frame image is a scene switching frame. For example, whether the frame 2 is the scene switching frame is detected by determining a histogram difference between the frame 1 and the frame 2.

Each time the decoder side receives an image slice at the frame 2, the decoder side immediately performs decoding and other processing. For example, after receiving a slice 0 at the frame 2, the decoder decodes, reconstructs, and sends the slice 0 at the frame 2 for display. Refer to FIG. 2. A position of the slice 0 in an image displayed after the slice 0 is sent for display corresponds to the image at the frame 2, and positions of a slice 1 and a slice 2 in the displayed image both correspond to images at the frame 1. Because the frame 2 is the scene switching frame, and the image at the frame 2 greatly differs from the image at the frame 1, when the displayed image includes both the slice at the frame 2 and the slices at the frame 1, image fragmentation (tearing) occurs. In addition, in a scenario in which Wi-Fi channel quality is poor, an image fragmentation problem is severer.

In addition, after the encoder side sends the frame 1, the decoder side feeds back a reference frame of the frame 1 to the encoder side. In this way, the encoder side encodes the frame 2 based on the feedback reference frame that is determined based on the frame 1. Because the frame 2 is the scene switching frame and greatly differs from the frame 1, a bitstream obtained by encoding the frame 2 by the encoder side based on the fed-back reference frame has a large quantity of codewords, a bitstream size increases greatly, and transmission failure is prone to occur on the frame 2, which affects image decoding by the decoder side and further affects a video display effect.

In view of this, this application provides a video frame processing method, to reduce or avoid occurrence of image fragmentation, and improve quality of a displayed image. Technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile communications system (universal mobile telecommunications system, UMTS), a worldwide interoperability for microwave access (worldwide interoperability for microwave access, WiMAX) communication system, a 5th generation (5th generation, 5G) system or new radio (new radio, NR) system, a wireless local area network (wireless local area network, WLAN), Wi-Fi, a future evolved communication system (for example, a 6G communication system), and the like.

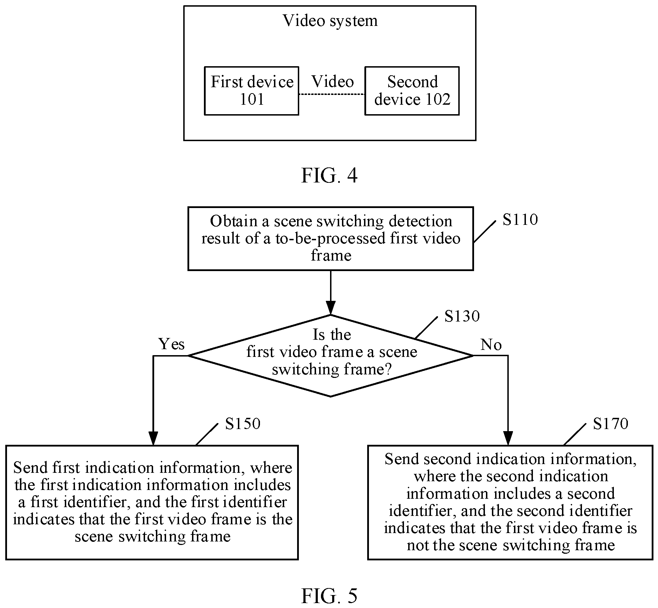

FIG. 4 is a diagram of an architecture of a video system applicable to an embodiment of this application. The video system may include at least one first device. The first device may have a video encoding capability and serve as an encoding device. A video frame processing system may further include at least one second device. The second device may have a video decoding capability and serve as a decoding device. In some scenarios, the second device may further have a capability of displaying a video frame. As shown in FIG. 4, a first device 101 may communicate with or exchange data with a second device 102, for example, perform video transmission and/or exchange information related to the video transmission.

In some possible designs, the first device 101 may be a terminal device having an encoding function. The second device 102 may be a terminal device having a decoding function. In embodiments of this application, the terminal device may also be referred to as a user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device in embodiments of this application may be a mobile phone (mobile phone), a tablet (pad), a computer having a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a 5G network, a terminal device in a future evolved public land mobile network (public land mobile network, PLMN), or the like.

The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on a body or integrated into clothes or an accessory of a user. The wearable device is not only a hardware device, but is used to implement a powerful function through software support, data exchange, and cloud interaction. In a broad sense, intelligent wearable devices include full-featured and large-size devices that can implement all or some functions without depending on smartphones, for example, smart watches or smart glasses, and devices that focuses on only one type of application and need to be used together with other devices such as smartphones, for example, various smart bands and smart jewelry for monitoring physical signs.

In some possible scenarios, in this application, the terminal device may be a terminal in an internet of things (internet of things, IoT) system. IoT is an important part of development of future information technologies. A main technical feature of the IoT is to connect an object to a network by using a communication technology, to implement an intelligent network of human-machine interconnection and thing-thing interconnection. The terminal device in this application may be a terminal in machine type communication (machine type communication, MTC). The terminal in this application may be a vehicle-mounted module, a vehicle-mounted component, an onboard component, a vehicle-mounted chip, or a vehicle-mounted unit that is built in a vehicle as one or more components or units. The vehicle uses the vehicle-mounted module, the vehicle-mounted component, the onboard component, the vehicle-mounted chip, or the vehicle-mounted unit that is built in the vehicle, to implement the method in this application. Therefore, embodiments of this application may be applied to an internet of vehicles, for example, vehicle-to-everything (vehicle-to-everything, V2X), long term evolution-vehicle (long term evolution-vehicle, LTE-V), and vehicle-to-vehicle (vehicle-to-vehicle, V2V), and the like.

In some other possible scenarios, the second device 102 may alternatively be a terminal device that has a decoding capability and a display capability, for example, a virtual reality (virtual reality, VR) terminal, an augmented reality (augmented reality, AR) terminal, a mixed reality (mixed reality, MR) terminal, or the like. The VR terminal, the AR terminal, and the MR terminal each may be referred to as an XR terminal. The XR terminal may be, for example, a head-mounted device (for example, a helmet or glasses), or may be an all-in-one machine, or may be a television, a display, a car, a vehicle-mounted device, a tablet, a smart screen, or the like. The XR terminal can present XR data to a user, and the user can experience diversified XR services by wearing or using the XR terminal. The XR terminal may access a network in a wireless or wired manner, for example, access a network through a Wi-Fi or 5G system.

In still some possible scenarios, the first device 101 may be a network device, or may be a network device that has a capability of forwarding a video frame provided by a third device. The network device (for example, an access network device) in embodiments of this application may be any device having a wireless transceiver function. The device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), and an access point (access point, AP), a wireless relay node, a wireless backhaul node, a transmission point (transmission point, TP), a transmission reception point (transmission reception point, TRP), or the like in a Wi-Fi system. Alternatively, the device may be a gNB or a transmission point (TRP or TP) in a 5G (for example, NR) system, may be one antenna panel or a group of antenna panels (including a plurality of antenna panels) of abase station in a 5G system, or may be a network node, for example, a baseband unit (BBU) or a distributed unit (distributed unit, DU), that constitutes a gNB or a transmission point.

The following describes the video frame processing method provided in embodiments of this application in detail with reference to the accompanying drawings. FIG. 5 is a schematic flowchart of a video frame processing method according to an example embodiment. The method may be performed by a first device. The first device may have a video frame encoding capability. In addition, it should be understood that in descriptions of this application, terms such as "first" and "second" are merely used for distinguishing and description, but should not be understood as an indication or implication of relative importance, or should not be understood as an indication or implication of a sequence.

Step S110: The first device obtains a scene switching detection result of a to-be-processed first video frame.

The first device may send a video. For example, the first device directly sends a video to a second device, or the first device sends a video to a second device through a third device. The third device may be a network device. Generally, the video includes a plurality of frames of images ranked by time. In other words, the video includes a plurality of frames of images arranged by timing. Each frame of image in the video may be denoted as a video frame. The first device processes and sends each video frame based on timing, to send the video. An example in which the first device sends a target video to the second device is used below for description. The first video frame may be any image frame in the target video. The first device may obtain the first video frame. The first device may also obtain the scene switching detection result of the first video frame.

In some examples, when the first device processes the first video frame, the first device may perform scene switching detection, to determine whether the first video frame is a scene switching frame. The first device may use a scene switching detection method to detect whether the first video frame is the scene switching frame. For example, the first device may determine a histogram difference between a previous frame of the first video frame and the first video frame, to determine whether the first video frame is the scene switching frame. If the first video frame is the scene switching frame, the scene switching detection result of the first video frame may be denoted as a first result. If the first video frame is not the scene switching frame, the scene switching detection result of the first video frame may be denoted as a second result. It should be noted that the scene switching detection method is not specifically limited in this embodiment of this application, and any method for determining whether the first video frame is the scene switching frame may be used as the scene switching detection method.

The first device may determine, when the obtained scene switching detection result of the first video frame is the first result, that the first video frame is the scene switching frame. The first device may determine, when the obtained scene switching detection result of the first video frame is the second result, that the first video frame is not the scene switching frame.

Step S130: The first device determines whether the first video frame is the scene switching frame; and if the first video frame is the scene switching frame, performs step S150 next; or if the first video frame is not the scene switching frame, performs step S170 next.

The first device may encode the first video frame. For example, the first device may encode the first video frame in a preset scalable coding mode. The first device encodes base layer image data of a to-be-processed video, and separately encode at least one piece of enhancement layer image data. For example, the first device may encode the first video frame in an existing scalable coding mode. The first device may encode the first video frame to obtain a bitstream of the first video frame. The bitstream may include a base layer image codeword and at least one enhancement layer image codeword. In a process of generating the bitstream of the first video frame, the first device processes the bitstream, so that the bitstream includes indication information of the scene switching frame. If the first video frame is the scene switching frame, the first device may perform an operation in step S 130. If the to-be-processed first video frame is not the scene switching frame, the first device may perform an operation in step S 150.

Step S150: The first device sends first indication information, where the first indication information includes a first identifier, and the first identifier indicates that the first video frame is the scene switching frame.

In some possible scenarios, the first indication information is in the bitstream of the first video frame, or the first indication information is in a target bitstream, and the target bitstream is a bitstream that is last sent before the bitstream of the first video frame is sent.

In this embodiment of this application, the first indication information includes the first identifier, and the first identifier may indicate (or represent) that the first video frame is the scene switching frame, so that the second device performs, based on the first indication information, a display operation corresponding to the scene switching frame (related descriptions or introductions are provided below).

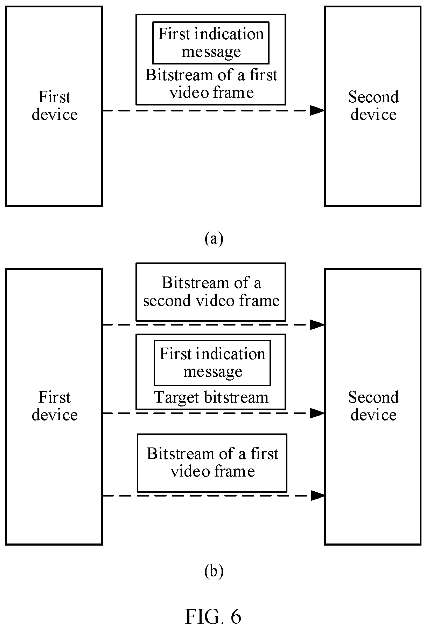

In a possible design, refer to (a) in FIG. 6. The bitstream of the first video frame may include the first indication information, so that the receive end obtains the first indication information in a process of decoding a bitstream of a first video, and the second device displays the first video frame in a display manner of the scene switching frame, thereby reducing or avoiding image fragmentation. In such a design, the first device sends the first indication information, and the first indication information is in the bitstream of the first video frame. This may be considered as that the first device sends the bitstream that is of the first video frame and that carries the first indication information.

The first video frame may be generally divided into a plurality of image units, and the plurality of image units are ranked in a preset order. The image unit may be one or more of an image slice, an image tile, a plurality of image blocks, a pixel, a tile, or a block. In some scenarios, the plurality of image blocks may be a group of image blocks (for example, a macroblock in H.264 and a largest coding block in H.265). H.264 may include high efficiency video coding (high efficiency video coding, HEVC) 264 and advanced video coding (advanced video coding, AVC) 264. The H.265 protocol may include scalable high-efficiency video coding (scalable high-efficiency video coding, SHVC) 265 and scalable video coding (scalable video coding, SVC) 265.

In a process in which the first device encodes the first video frame, the first device may encode the first video frame per image unit, so that the first device may generate a bitstream of each image unit in the first video frame. For each image unit, the first device may encode a base layer image of the image unit to obtain a base layer of the image unit, and separately encode at least one enhancement layer image of the image unit.

The first video frame may include at least one image unit arranged in order, and the order may be generally an order of sending image units in the first video frame. In the at least one image unit arranged in order, the initial image unit (denoted as a target image unit for ease of description) is an image unit that is first encoded and sent when the first video frame is processed. Alternatively, the at least one image unit included in the first video frame each has an image unit identifier. An order of at least one image unit identifier may be considered as the order of the at least one image unit. In some scenarios, the bitstream that is of the first video frame and that is generated by the first device may include a frame number of the first video frame. A video may include a plurality of video frames, and a frame number of a video frame may ensure a location or a relative location of the video frame in video timing. Similarly, the bitstream of the first video frame includes the bitstream of each image unit in the first video frame, and the bitstream of each image unit may include a ranking of the image unit.

In an example, when the first video frame is the scene switching frame, a bitstream that is of the target image unit and that is generated by the first device may include the first indication information, and the first indication information includes the first identifier. Therefore, the bitstream that is of the target image unit and that is generated by the first device may include the first identifier. The first identifier may represent or indicate that a video frame to which the target image unit belongs is the scene switching frame. Such a design may facilitate a device (for example, the second device) that receives the bitstream to determine, based on the first identifier that is in the received bitstream, that the video frame to which the bitstream belongs is the scene switching frame. In this way, the second device performs the display operation corresponding to the scene switching frame, to reduce or avoid image tearing. Optionally, the first indication information may be in header information of base layer image data of the bitstream of the target image unit. For example, the first identifier may occupy one bit (bit).

Optionally, the bitstream that is of each image unit in the first video frame and that is generated by the first device may include the first indication information, in other words, may include the first identifier. For example, the bitstream of the target image unit includes the first identifier. A bitstream of an image unit other than the target image unit may also include the first identifier. For example, header information of base layer image data of the bitstream of each image unit in the first video frame may include the first identifier.

Descriptions are provided below by using an example in which the bitstream of the target image unit includes the first indication information. The first indication information may be in the header information of the base layer image data (for ease of description, denoted as a base layer for short) of the bitstream of the target image unit, and the header information of the base layer may be at a network abstraction layer (network abstraction layer, NAL) corresponding to the bitstream of the target image unit. Generally, the bitstream of the target image unit is in a network abstraction layer unit (network abstraction layer unit, NALU). For example, the header information of the base layer of the target image unit may be in NAL header (NAL header) information, so that header information of the NALU in which the target image unit is located may include the first indication information, that is, may include the first identifier. For another example, the header information of the base layer of the target image unit may be in a subject of the NAL. In some possible scenarios, the header information of the base layer of the target image unit may be in a slice header (slice header). Therefore, a subject of the NALU in which the target image unit is located may include the first indication information, that is, may include the first identifier.

In another possible design, refer to (b) in FIG. 6. The target bitstream may include a first indication message. In addition, the target bitstream is a bitstream that is last sent by the first device before the first device sends the bitstream of the first video frame. The first device may send the target bitstream before sending the bitstream of the first video frame. In such a design, the target bitstream carries the first indication message, so that before receiving the bitstream of the first video frame, the second device can learn that a video frame received after the target bitstream is received is the scene switching frame. The first device sends the first indication information, and the first indication information is in the target bitstream. This may be considered as that the first device sends the target bitstream that carries the first indication information.

For example, in the target video, a ranking of a second video frame is before a ranking of the first video frame. Timing of the target bitstream may be later than timing of a bitstream of the second video frame. In other words, after sending the bitstream of the second video frame, the first device may send the target bitstream that carries the first indication message, and then send the bitstream of the first video frame. In some possible scenarios, the target bitstream may be implemented as a target NALU. In a bitstream of the target video, the target NALU is a next NALU of the last NALU in the second video frame, and/or in the bitstream of the target video, the target NALU is a previous NALU of an initial NALU in the first video frame.

In a possible implementation, to ensure that the first video frame can be successfully received by another device in a scenario in which channel quality is poor, in the bitstream that is of the first video frame and that is generated by the first device, a bitstream of each image unit may include base layer image data and a first amount of enhancement layer image data. The first amount may be a preset value. In some scenarios, the first device may obtain the first amount from a configuration file.

If the first video frame is the scene switching frame, a bitstream of the scene switching frame is usually large, and a bitstream that is of each image unit in the scene switching frame and that is generated by the first device includes a preset amount of enhancement layer image data. In such a design, a bitstream size of the scene switching frame can be reduced, so that a transmission success rate of the scene switching frame in an environment with poor channel quality can be improved, thereby improving video transmission quality.

Step S170: Send second indication information, where the second indication information includes a second identifier, and the second identifier indicates that the first video frame is not the scene switching frame.

In some possible scenarios, the second indication information is in the bitstream of the first video frame, or the second indication information is in a target bitstream, and the target bitstream is a bitstream that is last sent before the bitstream of the first video frame is sent.

In this embodiment of this application, the second indication information includes the second identifier, and the second identifier may indicate (or represent) that the first video frame is not the scene switching frame, so that the second device performs, based on the second indication information, a display operation corresponding to a non-scene switching frame (related descriptions or introductions are provided below).

In an example, when the first video frame is not the scene switching frame, a bitstream that is of a target unit and that is generated by the first device may include the second indication information, and the second indication information includes the second identifier. Therefore, the bitstream that is of the target image unit and that is generated by the first device may include the second identifier. The second identifier may represent that a video frame to which a target image frame belongs is not the scene switching frame.

For a location of the second indication information, refer to a location of the first indication information. For example, if the first video frame is not the scene switching frame, the bitstream that is of the target image unit and that is generated by the first device may include the second indication information, and the second indication information includes the second identifier. The second identifier may represent or indicate that the video frame to which the target image unit belongs is not the scene switching frame. Such a design may facilitate a device (for example, the second device) that receives the bitstream to determine, based on the second identifier that is in the received bitstream, that the video frame to which the bitstream belongs is not the scene switching frame. In this way, it is convenient for the second device to perform the display operation corresponding to the non-scene switching frame, for example, display the first video frame in an existing manner of displaying a video frame. Optionally, the second indication information may be in header information of base layer image data of the bitstream of the target image unit. For example, the second identifier may occupy one bit.

Optionally, the bitstream that is of each image unit in the first video frame and that is generated by the first device may include the second indication information, in other words, may include the second identifier. For example, the bitstream of the target image unit includes the second identifier. A bitstream of an image unit other than the target image unit may also include the second identifier. For example, header information of a base layer of the bitstream of each image unit in the first video frame may include the second identifier.

Descriptions are provided below by using an example in which the bitstream of the target image unit includes the second indication information. The second indication information may be in the header information of the base layer of the bitstream of the target image unit, and the header information of the base layer may be at an NAL corresponding to the bitstream of the target image unit. Generally, the bitstream of the target image unit is in an NALU. For example, the header information of the base layer of the target image unit may be in NAL header (NAL header) information, so that header information of the NALU in which the bitstream of the target image unit is located may include the second indication information, that is, may include the second identifier. For another example, the header information of the base layer of the target image unit may be in a subject of the NAL. In some possible scenarios, the header information of the base layer of the target image unit may be in a slice header (slice header). Therefore, a subject of the NALU in which the target image unit is located may include the second indication information, that is, may include the second identifier.

For another example, if the first video frame is not the scene switching frame, the target bitstream generated by the first device may include a second indication message. Timing of the target bitstream is earlier than timing of the bitstream of the first video frame. The first device may send the target bitstream before sending the bitstream of the first video frame. In such a design, the target bitstream carries the second indication message, so that before receiving the bitstream of the first video frame, the second device can learn that a video frame received after the target bitstream is received is not the scene switching frame.

In some scenarios, if the first video frame is not the scene switching frame, the bitstream of the first video frame is usually small, and a bitstream that is of each image unit in the scene switching frame and that is generated by the first device may include base layer image data and a second amount of enhancement layer image data. The second amount may be determined based on channel quality. For example, better channel quality may indicate a larger second amount. In the bitstream of the first video frame, if the amount of enhancement layer image data is larger, a video display effect can be improved.

The first device generates and sends a bitstream of each image unit based on a ranking of the image unit in the first video frame. The first video frame includes at least one image unit arranged in order, and the first device may send a bitstream of each image unit based on a ranking of the image unit.

To improve a video transmission success rate and ensure the video display effect, the first device may send the first video frame in a preset sending mechanism. In some examples, if the first video frame is the scene switching frame, the first device may send the first video frame in the preset sending mechanism; if the first video frame is not the scene switching frame, the first device may send the first video frame in an existing sending mechanism.

In a possible design, for ease of description, in any two adjacent image units in the at least one image unit that is arranged in order and that is included in the first video frame, a former image unit is denoted as a first image unit, and a latter image unit is denoted as a second image unit. After sending a bitstream of the first image unit, the first device may detect whether first feedback information that corresponds to the first image unit and that is sent by the second device is received. Feedback information corresponding to an image unit may represent that a bitstream that is of the image unit and that is received by the second device meets a preset quality condition. In this way, the first device may determine, based on the detected first feedback information corresponding to the first image unit, that the bitstream of the first image unit is successfully fully received by the second device. The first device may send a bitstream of the second image unit after determining that the bitstream of the first image unit is successfully received by the second device. In this embodiment of this application, when sending a bitstream of each image unit in the first video frame based on a ranking of the image unit, the first device may continue to send a next image unit after determining that a previous image unit is successfully received. In such a design, it can be ensured that the scene switching frame is received, and an effect of displaying a video frame can be improved.

In a possible case, if the first device detects no first feedback information within preset duration since sending of the bitstream of the first image unit, it means that within the preset duration, the bitstream of the first image unit is not received by the second device, and the bitstream of the first image unit may fail to be transmitted. In some scenarios, the preset duration may be greater than or equal to duration required by the first device to encode a video frame. The preset duration may be considered as extended duration of transmission duration of the first image unit. Within the extended duration of the transmission duration, the first device (or an encoder) may perform processing such as encoding on an image unit that is ranked after the first image unit, but does not transmit a bitstream of another image unit.

In some examples, the first device may repeatedly send the bitstream of the first image unit until the first feedback information is detected, and send the bitstream of the second image unit after the first feedback information is detected. In some other examples, if the first device detects no first feedback information within the preset duration since sending of the bitstream of the first image unit, the first device may first send the bitstream of the second image unit. After sending a bitstream of the last image unit in a first video, the first device may resend a bitstream of an image unit for which no feedback information is detected, to increase a transmission success rate of the video frame.

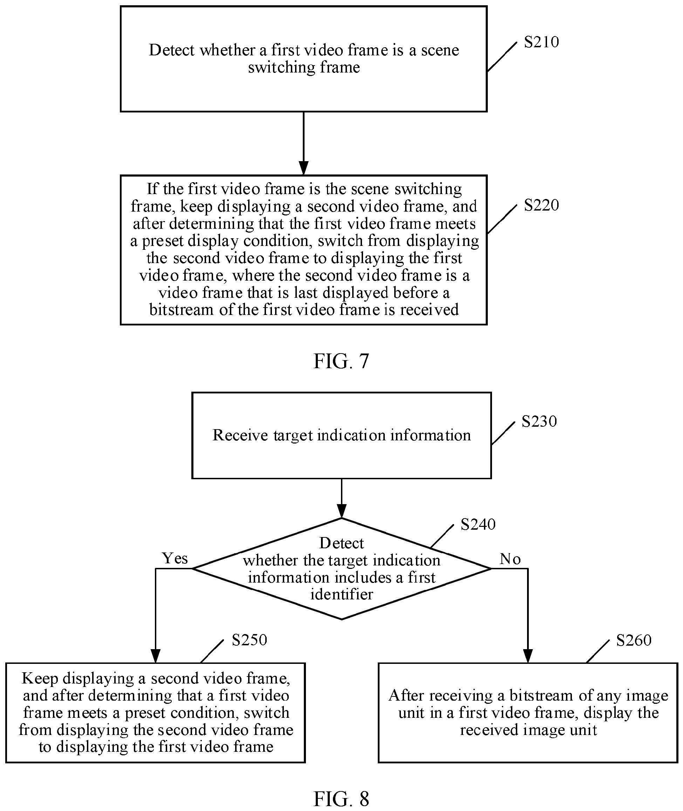

FIG. 7 is a schematic flowchart of a video frame processing method according to an example embodiment. The method may be performed by a second device. The second device may have a video frame decoding capability. The video frame processing method may include the following steps:

Step S210: The second device detects whether a first video frame is a scene switching frame.

Step S220: If the first video frame is the scene switching frame, the second device keeps displaying a second video frame, and after determining that the first video frame meets a preset display condition, the second device switches from displaying the second video frame to displaying the first video frame, where the second video frame is a video frame that is last displayed before a bitstream of the first video frame is received.

In a possible design, the second device may determine a histogram difference between a previous frame of the first video frame and the first video frame, to determine whether the first video frame is the scene switching frame. In another possible design, the second device may detect received target indication information, to determine whether the first video frame is the scene switching frame.

The second device may receive the target indication information. The target indication information may be the foregoing first indication information or the foregoing second indication information sent by a first device. For a location of the target indication information, refer to the related descriptions of the location of the first indication message or the related descriptions of the location of the second indication message in the foregoing embodiment. Details are not described herein again. The second device may determine whether the target indication information includes a first identifier. If the target indication information includes the first identifier, the second device may determine that the first video frame is the scene switching frame. If the target indication information does not include the first identifier, the second device may determine that the first video frame is not the scene switching frame.

In a possible design, refer to (a) in FIG. 6. The target indication information may be in the bitstream of the first video frame. The second device may detect whether the target indication information in the bitstream of the received first video frame includes the first identifier. If the target indication information includes the first identifier, the second device may determine that a video frame to which the target indication information belongs is the scene switching frame, that is, the received first video frame is the scene switching frame. The second device may perform, on the received first video frame, a display operation corresponding to the scene switching frame, for example, perform an operation in step S230.

If the target indication information does not include the first identifier, or the target indication information includes the foregoing second identifier, the second device may determine that a video frame to which the target indication information belongs is not the scene switching frame, that is, the received first video frame is not the scene switching frame. The second device may perform, on the received first video frame, a display operation corresponding to a non-scene switching frame, for example, perform an operation in step S250.

The second device may receive a bitstream of a video frame. Because channel quality is being changed, the second device may receive some or all bitstreams of one video frame. One video frame usually includes bitstreams of a plurality of image units. The second device may receive bitstreams of all the image units, or receive bitstreams of some of the image units. The second device may detect whether a bitstream of a received video frame includes the first identifier, to help determine whether the received video frame is the scene switching frame.

Generally, the video frame includes a plurality of image units arranged in order, and a first device side generally sends bitstreams of the image units in the order of the plurality of image units in the video frame. In some examples, the second device may detect whether target indication information in a bitstream of each image unit includes the first identifier. In some other examples, the second device may detect whether target indication information in a bitstream of a target image unit in the received video frame includes the first identifier. The target image unit is the initial image unit in at least one image unit that is arranged in order and that is included in the received video frame (denoted as a first video frame for ease of description).

In a possible implementation, a bitstream of each image unit in a video frame usually includes base layer image data. It should be known in the art that the base layer image data generally may have a high transmission success rate when the channel quality is poor. Therefore, the bitstream that is of each image unit in the first video frame and that is received by the second device usually includes base layer image data. The second device may detect whether target indication information in header information of base layer image data of the target image unit in the first video frame includes the first identifier.

If detecting that the target indication information in the bitstream of the target image unit includes the first identifier, the second device may determine a video frame to which the bitstream of the target image unit belongs, namely, the first video frame, is the scene switching frame. In this case, the second device may next perform the display operation corresponding to the scene switching frame. If detecting that the target indication information in the bitstream of the target image unit does not include the first identifier or includes the second identifier, the second device may determine that the first video frame is not the scene switching frame, and the second device next performs the display operation corresponding to the non-scene switching frame.

In another possible design, refer to (b) in FIG. 6. The target indication information may be in a target bitstream. Timing of the target bitstream is earlier than timing of the bitstream of the first video frame. After sending a bitstream of the second video frame and before sending the bitstream of the first video frame, the first device may send the target bitstream that carries the first indication message. The second device may detect whether the target indication information in the received target bitstream includes the first identifier. If the target indication information includes the first identifier, the second device may determine that a video frame that is last received by the second device after the second device receives the target bitstream is the scene switching frame. For example, if the video frame that is last received by the second device after the second device receives the target bitstream is the first video frame, the second device may determine that the first video frame is the scene switching frame. In some scenarios, the bitstream of the first video frame may not be received by the second device due to poor channel quality. If the video frame that may be last received by the second device after the second device receives the target bitstream is a third video frame, the second device may determine that the third video frame is the scene switching frame. The third video frame is a video frame whose timing is later than that of the first video frame.

If the target indication information includes the first identifier, the second device may determine that a video frame (for example, the first video frame) that is last received by the second device after the second device receives the target bitstream is the scene switching frame. The second device may perform, on the first video frame, the display operation corresponding to the scene switching frame, for example, the operation in step S220. If the target indication information does not include the first identifier, or the target indication information includes the second identifier, the second device may determine that a video frame (for example, the first video frame) that is last received by the second device after the second device receives the target bitstream is not the scene switching frame. The second device may perform, on the first video frame, the display operation corresponding to the non-scene switching frame.

It can be learned from the foregoing descriptions that, after the second device detects whether the first video frame is the scene switching frame, in a possible case, the first video frame is the scene switching frame; or in another possible case, the first video frame is not the scene switching frame. In this embodiment of this application, the display operation performed by the second device on the scene switching frame is different from the display operation performed on the non-scene switching frame. The two cases are separately described below.

When the second device detects that the first video frame is the scene switching frame, the second device may keep displaying the second video frame, where the second video frame is a video frame that is last displayed before the bitstream of the first video frame is received. The second device may keep displaying the second video frame, and after determining that the first video frame meets the preset display condition, the second device switches from displaying the second video frame to displaying the first video frame.

Generally, after receiving a bitstream of an image unit in any video frame, the second device decodes the image unit, and generates a reconstructed image based on data obtained through decoding. The reconstructed image may be for generating a reference frame, updating the reference frame, or displaying the image unit. As described above, the reference frame is usually for inter coding on a next video frame. A manner of generating the reconstructed image and a purpose of the generated reconstructed image are not excessively limited in this application. The reconstructed image may be generated in an existing manner.

The second device may include a display apparatus, so that the second device has a display capability. Alternatively, the second device may be connected to a display apparatus (in a wired connection or wireless connection manner), and the second device may implement a display function through the display apparatus that is connected to the second device.

In a possible design, after determining, in the operation of step S210, that the first video frame is the scene switching frame, the second device may not first display the first video frame. Instead, the second device keeps displaying the currently displayed video frame (denoted as the second video frame). The second video frame may be a video frame that is last received and displayed by the second device before the second device receives the first video frame. "Before the second device receives the first video frame" may mean before receiving a bitstream of any image unit in the first video frame.

In some examples, a first storage unit in the second device may store data of a video frame, where the data of the video frame in the first storage unit may be for display. For example, the second device may obtain data of each image unit in the second video frame from the first storage unit, to display the second video frame. A second storage unit may also store data of a video frame, where the data of the video frame in the second storage unit may be for determining the reference frame. The second device may decode the bitstream of the any image unit in the received first video frame, and store a decoded bitstream in the second storage unit. After determining that bitstreams of all the image units in the first video frame are received, the second device may store data of the first video frame in the first storage unit, and update the data in the first storage unit, to display the first video frame.

The second device may include one or more storage apparatuses. In some scenarios, the first storage unit and the second storage unit in the foregoing examples may be in a same storage apparatus, and the first storage unit and the second storage unit may be different partitions or different storage locations of the storage apparatus. In some other scenarios, the first storage unit and the second storage unit in the foregoing examples may be in different storage apparatuses. This is not excessively limited in this application.

In another possible design, the video frame received by the second device is displayed by the display apparatus that is connected to the second device. The second device may decode a received image unit, and then store data obtained by decoding the image unit in the first storage unit. The display apparatus may obtain the data obtained by decoding the image unit from the first storage unit, and display the data. In this embodiment of this application, that the display apparatus obtains the image unit from the storage unit includes but is not limited to the following manners: The second device sends data in the first storage unit to the display apparatus, or the display apparatus requests the data in the first storage unit. The first storage unit may be disposed in the second device, or may be disposed in the display apparatus.

In step S220, the second device may keep displaying the second video frame, and after determining that the first video frame meets the preset display condition, the second device switches from displaying the second video frame to displaying the first video frame. The display condition may include one or both of the following:
Condition 1: It is determined that bitstreams of all image units in the first video frame are received.
Condition 2: It is determined that the first video frame meets a quality condition.

For example, the second device may display the first video frame after determining that the bitstreams of all the image units in the first video frame are received. Because the bitstreams of all the image units in the first video frame are received by the second device, the second device may directly display the first video frame, that is, display all the image units in the first video frame, to avoid a problem that the display interface includes the image units in the first video frame and the image units in the second video frame, that is, reduce or avoid occurrence of image tearing.

For another example, the second device may display the first video frame after determining that the first video frame meets the quality condition. In this example, that the first video frame meets the quality condition may reflect that the first video frame meets a display demand (by system default or specified by a user). In this case, image tearing is less prone to occur when the first video frame is displayed.

For still another example, the second device may display the first video frame after determining that the bitstreams of all the image units in the first video frame are received and the first video frame meets the quality condition.

The quality condition may include one or both of the following:
Condition A: In the received bitstreams of all the image units in the first video frame, an amount of enhancement layer image data included in a bitstream of each of the image units is greater than or equal to a first amount threshold, where the first amount threshold is preset.
Condition B: A bitstream of each of the image units includes at least one quantization parameter, and the quantization parameter is less than a first parameter threshold, where the first parameter threshold is preset.

For example, the quality condition may include the condition A. The second device may determine a quantity of enhancement layers included in the received bitstream of each of the image units in the first video frame. If a quantity of enhancement layer images included in the bitstream of each of the image units is greater than the preset quantity, the second device may determine that the first video frame meets the quality condition.

For another example, the quality condition may include the condition B. The second device may determine that the bitstream of each of the image units includes one or more quantization parameters. In some scenarios, the quantization parameter may represent quality of the bitstream of the image unit. If the bitstream of each of the image units includes at least one quantization parameter less than the first parameter threshold, the second device may determine that the first video frame meets the quality condition.

For still another example, the quality condition may include the condition A and the condition B. The second device may determine that a quantity of enhancement layers included in the received bitstream of each of the image units in the first video frame is greater than the first amount threshold, and determine that the bitstream of each of the image units includes at least one quantization parameter less than the first parameter threshold. In this case, the second device may determine that the first video frame meets the quality condition.

When the second device detects that the first video frame is not the scene switching frame, the second device may receive the bitstream of the any image unit in the first video frame, and then display the received image unit.

If the first video frame is not the scene switching frame, after receiving the bitstream of the any image unit in the first video frame, the second device decodes the received image unit, and performs image reconstruction for display. In other words, after receiving a bitstream of an image unit of a video frame that is not the scene switching frame, the second device decodes the image unit and performs image reconstruction for display, without a need to determine whether bitstreams of all image units in the video frame are received.

In a possible design, after determining that the first video frame is not the scene switching frame, the second device may decode the received bitstream of the any image unit in the first video frame, perform image reconstruction, and store data of the first video frame in the first storage unit, to update the first storage unit, so as to display the image unit in the received first video frame.

For example, a video frame currently displayed by the second device is the second video frame. After determining that the received first video frame is not the scene switching frame, the second device may decode an initial image unit in the received first video frame, perform image reconstruction, and store, in the first storage unit, data of the initial image unit in the first video frame for display. In this case, an interface displayed by the second device may include the initial image unit in the first video frame and an image unit in the second video frame other than an initial image unit in the second video frame.

To ensure improvement of a video display effect, embodiments of this application further provide a feedback mechanism for transmitting the scene switching frame. For a bitstream of any image unit (denoted as an image unit A for ease of description) of the scene switching frame (where an example in which the first video frame is the scene switching frame is used below), the second device may perform the following operation: After receiving the bitstream of the image unit A, after determining that the bitstream of the image unit A meets a feedback condition, the second device may send feedback information corresponding to the image unit A.

The feedback condition may include a condition 1. The condition 1 is that an amount of enhancement layer image data included in the bitstream of the image unit A is greater than or equal to a second amount threshold, where the second amount threshold is preset. In some scenarios, the second amount threshold may be the same as the first amount threshold. In such a design, after receiving the bitstream of the any image unit in the first video frame, the second device may determine whether the received bitstream of the image unit meets the feedback condition, and send the feedback information of the image unit when determining that the received bitstream of the image unit meets the feedback condition, so that the first device can learn whether the bitstream of the image unit in the first video frame is successfully transmitted and meets a quality requirement. For example, after receiving the feedback information corresponding to the image unit A, the first device may determine that the bitstream of the image unit A is successfully received by the second device, and the received bitstream of the image unit A meets the quality requirement of the second device. By setting such feedback information, it can be ensured that bitstreams of all image units in the scene switching frame are received during video transmission. In this way, the high transmission success rate is achieved, and an effect of displaying the scene switching frame is improved.

The feedback condition may include a condition 2 and the condition 1. The condition 2 is that it is determined that a quantization parameter included in the image unit A is less than or equal to a second parameter threshold, where the second parameter threshold is preset. In some scenarios, the second parameter threshold may be the same as the first parameter threshold. When the channel quality is unstable, the second device may fail to receive all enhancement layers of the image unit A, and the image unit A may not meet the quality requirement. In such a design, the second device performs feedback when the bitstream of the image unit A includes enhancement layers of a layer quantity greater than or equal to the second amount threshold, and quality of the bitstream of the image unit A is good. In this way, the first device retransmits the image unit A when the first device receives no feedback information of the image unit A, so that the second device can receive a bitstream of the image unit A with better quality, thereby optimizing the effect of displaying the scene switching frame.

If the first video frame is not the scene switching frame, after receiving the bitstream of the any image unit in the first video frame, the second device may send feedback information of the image unit. In this case, the first device may determine, based on the received feedback information of the image unit, that the bitstream of the image unit is fully or partially received by the second device.

FIG. 8 is a schematic flowchart of a video frame method according to an example embodiment. A second device may detect target indication information to determine whether a first video frame is a scene switching frame, and perform a corresponding display operation. The second device may perform some or all of the following steps in the method:
Step S230: The second device receives the target indication information.
Step S240: The second device detects whether the target indication information includes a first identifier; and if the target indication information includes the first identifier, perform step S250 next; or if the target indication information does not include the first identifier, perform step S260 next.
Step S250: The second device keeps displaying the second video frame, and after determining that the first video frame meets a preset condition, the second device switches from displaying the second video frame to displaying the first video frame.
Step S260: After receiving a bitstream of any image unit in the first video frame, the second device displays the received image unit.

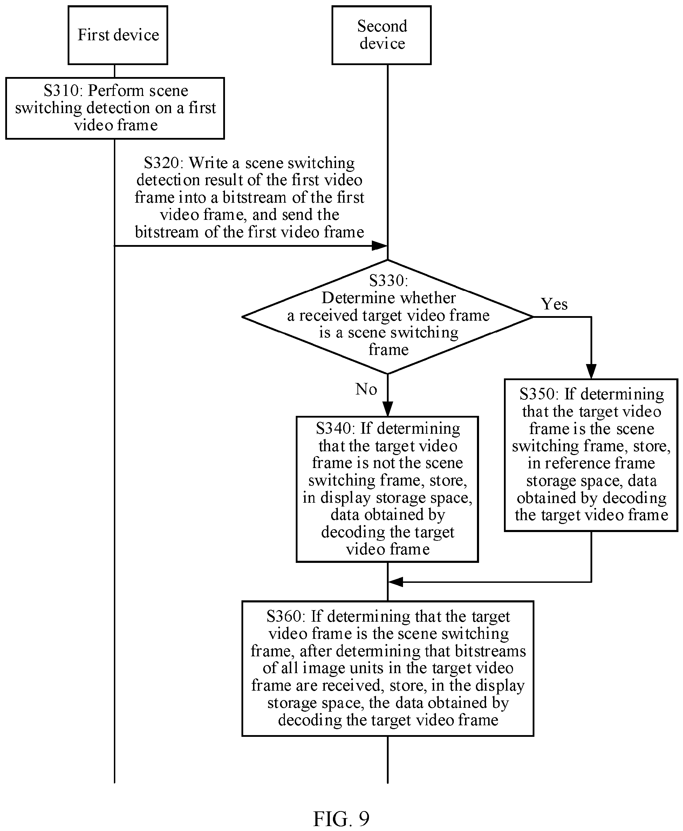

In the foregoing embodiments provided in this application, the method provided in embodiments of this application is separately described from a perspective of interaction between a transmit end (an encoder side) and a receive end (a decoder side). The foregoing first indication information (or second indication information) may be set in a bitstream of a video frame, or may be set in a target bitstream. For ease of understanding of the video frame processing method provided in embodiments of this application, a process of interaction between the first device and the second device is described below by using an example in which the first indication information (or the second indication message) is in the bitstream of the video frame. FIG. 9 is a schematic flowchart of a process of interaction between a first device and a second device according to an example embodiment. In an actual application scenario, the second device may perform one or more of the following steps:
Step S310: The first device performs scene switching detection on a first video frame.

In a scenario in which the first device sends a target video to the second device, the first video frame may be any video frame in the target video. The first device may perform scene switching detection on the first video frame before encoding the first video frame.

Each video frame may include at least one image unit arranged in order. In some examples, the first device performs scene switching detection on the first video frame, and performs scene switching detection based on a histogram of an n^{th} image unit in a previous video frame of the first video frame and a histogram of an n^{th} image unit in the first video frame. A scene switching detection result of the first video frame may be used in a process of encoding the first video frame.

Step S320: The first device writes the scene switching detection result of the first video frame into a bitstream of the first video frame, and sends the bitstream of the first video frame.

The first device may write the scene switching detection result of the first video frame into the bitstream of the first video frame. For example, the scene switching detection result of the first video frame is a first result, that is, the first video frame is a scene switching frame, and the first device may write a first identifier into the bitstream of the first video frame.

In some possible implementations, the first device may add a syntax element of a scene switching frame identifier to a slice header (general slice segment header), for example, the scene switching frame identifier. The scene switching frame identifier may have one-bit (bit) fixed-length coding. It should be noted that, in this embodiment of this application, the syntax element of the scene switching frame identifier may be denoted as scene_change_flag, which is merely used as an example for description, and is not used as a unique syntax element. In an actual application scenario, another syntax element may be alternatively used to represent the scene switching frame identifier. This is not excessively limited in embodiments of this application.

In some examples, in the process in which the first device encodes the first video frame, the first device may write the first identifier into header information of a base layer of an initial image unit in the first video frame. In a possible implementation, if the first video frame is the scene switching frame, the first device adjusts a quantity of layers of the first video frame to a preset value. For example, a bitstream that is of each image unit in the first video frame and that is generated by the first device may include base layer image data and a first amount of enhancement layer image data.

The second device may receive a bitstream of any video frame. For ease of distinguishing, in this embodiment, the video frame received by the second device is denoted as a target video frame.

Step S330: The second device determines whether the received target video frame is the scene switching frame.

The second device may detect whether a bitstream of an initial image unit in the received target video frame includes the first identifier. If the bitstream of the initial image unit in the target video frame includes the first identifier, the second device may determine that the target video frame is the scene switching frame. If the bitstream of the initial image unit in the target video frame does not include the first identifier or includes a second identifier, the second device may determine that the target video frame is a non-scene switching frame.

In a possible implementation, in a slice header of the target video frame, if a value of a syntax element first_slice_segment_in_pic_flag is 1, it may be determined that the image unit is the initial image unit in the target video frame; if a value of a syntax element first_slice_segment_in_pic_flag is not 1, it may be determined that the image unit is not the initial image unit in the target video frame.

In a possible design, the target video frame that may be received by the second device is the first video frame sent by the first device. In other words, the second device receives the first video frame. In some scenarios, the second device receives no bitstream of the initial image unit in the first video frame. The second device may fail to detect whether the bitstream of the initial image unit in the first video frame includes the first identifier. In some examples, the second device may discard the first video frame. For example, the second device does not store data of the first video frame, and does not display the first video frame. The second device performs the operation in step S330 on a video frame that is received by the second device again.

Step S340: If determining that the target video frame is not the scene switching frame, the second device stores, in display storage space, data obtained by decoding the target video frame.

Step S350: If determining that the target video frame is the scene switching frame, the second device stores, in reference frame storage space, data obtained by decoding the target video frame.

In this embodiment of this application, the second device may decode the target video frame. The second device may switch, depending on whether the target video frame is the scene switching frame, storage space for storing the target video frame. For example, if the target video frame is not the scene switching frame, the second device may store, in the display storage space, the data obtained by decoding the target video frame, for example, store, in display storage space DDR1, a reconstructed image of each image unit in the target video frame. The display storage space is for storing an image of a displayed video frame. That the second device stores, in display storage space, a reconstructed image of each image unit in the target video frame is also updating data in the display storage space, so that each image unit in the target video frame is displayed. That the second device stores, in the display storage space, data of any image unit in the target video frame may be understood as: The second device sends the any image unit in the target video frame for display. Next, step S370 may be performed.

If the target video frame is the scene switching frame, the second device may decode bitstreams of all image units in the target video frame, and store, in reference frame storage space DDR2, the data obtained through decoding. For example, the second device decodes the bitstreams of all the image units in the target video frame, to generate a reconstructed image. The reconstructed image may be for generating (or updating) an optimal reference frame, to facilitate inter video frame decoding reference. Next, step S360 may be performed.

Step S360: If determining that the target video frame is the scene switching frame, after determining that the bitstreams of all the image units in the target video frame are received, the second device stores, in the display storage space, the data obtained by decoding the target video frame.

If the target video frame is the scene switching frame, the second device may determine whether the bitstreams of all the image units in the target video frame are received. For example, if the second device determines that a bitstream of each image unit in the target video frame includes the base layer image data and the first amount of enhancement layer image data, the second device may determine that the bitstreams of all the image units in the target video frame are received.

After determining that the bitstreams of all the image units in the target video frame are received, the second device stores, in the display storage space, the data obtained by decoding the target video frame, that is, sends the target video frame for display. In such a design, the second device may directly display all the image units in the target video frame, to avoid image fragmentation, during displaying of some image units, caused because the target video frame is the scene switching frame, so that quality of a displayed image is improved.

To implement the functions in the method provided in the foregoing embodiments of this application, the transmit end and the receive end each may include a hardware structure and/or a software module, to implement the functions in a form of the hardware structure, the software module, or a combination of the hardware structure and the software module. Whether a function in the foregoing functions is performed by using the hardware structure, the software module, or the combination of the hardware structure and the software module depends on particular applications and design conditions of the technical solutions.

The following describes, with reference to the accompanying drawings, communication apparatuses configured to implement the foregoing methods in embodiments of this application. Therefore, all the foregoing content may be used in the following embodiments. Repeated content is not described again.

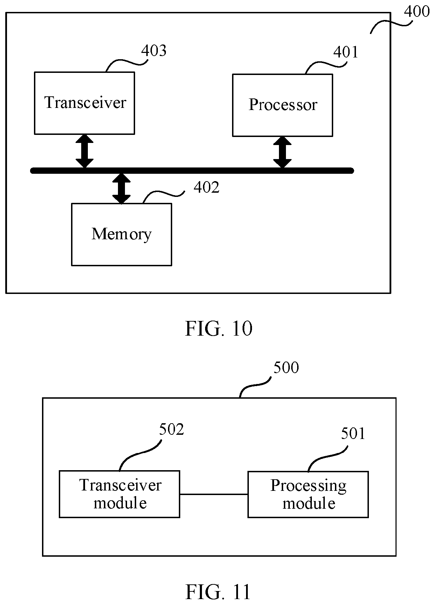

FIG. 10 is a diagram of a structure of a video frame processing device 400 according to an embodiment of this application. The video frame processing device 400 may correspondingly implement the functions or steps implemented by the first device (a transmit end) or the second device (a receive end) in the foregoing method embodiments. The video frame processing device 400 may be an electronic device, or may be a chip or a circuit, for example, a chip or a circuit disposed in the electronic device. The video frame processing device 400 may include a processor 401 and a memory 402. The memory 402 may be configured to store instructions (code or a program) and/or data. The processor 401 may read the instructions (the code or program) and/or the data in the memory, to implement a corresponding method. Optionally, the video frame processing device 400 may further include a transceiver 403. The transceiver 403 and the processor 401 may be connected through a bus system. Components in the video frame processing device 400 may be independently disposed, or may be partially or completely integrated.

It should be understood that the processor 401 may be a chip. The processor may be a field-programmable gate array (field-programmable gate array, FPGA), an application-specific integrated circuit (application specific integrated circuit, ASIC), a system-on-a-chip (system-on-a-chip, SoC), or a central processing unit (central processing unit, CPU), a network processor (network processor, NP), a digital signal processor (digital signal processor, DSP), a micro controller unit (micro controller unit, MCU), or a programmable logic device (programmable logic device, PLD) or another integrated chip.

In an implementation process, steps in the foregoing methods can be implemented by using a hardware integrated logical circuit in the processor, or by using instructions in a form of software. The steps in the methods disclosed with reference to embodiments of this application may be directly performed by a hardware processor, or may be performed by a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It should be noted that the processor 401 may be an integrated circuit chip and has a signal processing capability. In an implementation process, the steps in the foregoing method embodiments can be implemented by a hardware integrated logical circuit in the processor, or by using instructions in a form of software. The processor may be a general-purpose processor, a digital signal processor (DSP), an application specific integrated circuit (ASIC), a field programmable gate array (FPGA) or another programmable logic device, a discrete gate or a transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps in the methods disclosed with reference to embodiments of this application may be directly performed by a hardware decoding processor, or may be performed by a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a non-volatile memory, or may include both the volatile memory and the non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that, the memory of the systems and methods described in this specification includes but is not limited to these and any other memories of appropriate types.

In some embodiments, the video frame processing device 400 can correspondingly implement behavior and functions of the transmit end in the foregoing method embodiments. For example, the video frame processing device 400 may be the transmit end, or may be a component (for example, a chip or a circuit) used in the transmit end. The video frame processing device 400 may include a processor 401. The processor 401 may be configured to perform all data frame processing operations performed by the transmit end in the embodiment shown in FIG. 5, for example, step S150 in the embodiment shown in FIG. 5, and/or another process used to support the technologies described in this specification. The processor 401 is configured to perform an operation other than all receiving or sending operations performed by the first device in the embodiment shown in FIG. 5, for example, step S170 in the embodiment shown in FIG. 5, and/or another process used to support the technologies described in this specification.

For example, the processor 401 is configured to determine whether a to-be-processed first video frame is a scene switching frame. If the first video frame is the scene switching frame, the transceiver 403 is configured to send indication information, where the indication information includes a first identifier, and the first identifier indicates that the first video frame is the scene switching frame. In some scenarios, the indication information is in a bitstream of the first video frame, or the indication information is in a target bitstream, and the target bitstream is a bitstream that is last sent before the bitstream of the first video frame is sent.

In an optional implementation, the first video frame includes at least one image unit arranged in order, a target image unit is the initial image unit in the first video frame, and the indication information is in a bitstream of the target image unit.

In an optional implementation, the target image unit may be an image slice (slice), an image tile (tile), or a plurality of image blocks, for example, a group of image blocks (for example, a macroblock in an H.264 protocol and a largest coding block in an H.265 protocol).

In an optional implementation, if the first video frame is the scene switching frame, header information of base layer image data of the bitstream of the target image unit includes the indication information, where the header information is at a network abstraction layer corresponding to the bitstream of the target image unit.

In an optional implementation, if the first video frame is the scene switching frame, a bitstream of each image unit includes base layer image data and a first amount of enhancement layer image data, where the first amount is preset; or if the first video frame is not the scene switching frame, a bitstream of each image unit includes base layer image data and a second amount of enhancement layer image data, where the second amount is determined based on channel quality, and the first amount is less than or equal to the second amount.

In an optional implementation, the indication information is in the bitstream of the first video frame. The transceiver 403 sends the indication information, and is further configured to: send a bitstream of a first image unit, where in any two image units that are adjacent in order in the arrangement, a former image unit is the first image unit, and a latter image unit is a second image unit; and send a bitstream of the second image unit if first feedback information corresponding to the first image unit is detected, where the first feedback information represents that an amount of enhancement layer image data included in the bitstream that is of the first image unit and that is received by a receive end is greater than or equal to a preset amount threshold.

In an optional implementation, if the first feedback information is not detected by the transceiver 403 within preset duration since the bitstream of the first image unit is sent, the transceiver 403 repeatedly sends the bitstream of the first image unit until the first feedback information is detected; or if the first feedback information is not detected within preset duration since the bitstream of the first image unit is sent, the transceiver 403 sends the bitstream of the second image unit; and resends the bitstream of the first image unit after a bitstream of the last image unit in the first video frame is sent.

In some embodiments, the video frame processing device 400 can correspondingly implement behavior and functions of the receive end in the foregoing method embodiments. For example, the video frame processing device 400 may be the receive end, or may be a component (for example, a chip or a circuit) used in the receive end. The video frame processing device 400 may include a processor 401 and a transceiver 403. The processor 401 may be configured to perform a video frame processing operation performed by the receive end in the embodiment shown in FIG. 7, for example, step S210 in embodiments shown in FIG. 7 and FIG. 8, and/or another process used to support the technologies described in this specification. The processor 401 is configured to perform an operation other than all receiving or sending operations performed by the transmit end in embodiments shown in FIG. 7 and FIG. 8, for example, step S220 and step S210 in the embodiment shown in FIG. 7, and/or another process used to support the technologies described in this specification.

In an optional implementation, the transceiver 403 is configured to receive indication information. The processor 401 is configured to: detect whether the indication information includes a first identifier, where the first identifier indicates whether the first video frame is a scene switching frame; and if the first video frame is the scene switching frame, keep displaying a second video frame, and after determining that the first video frame meets a preset display condition, switch from displaying the second video frame to displaying the first video frame, where the second video frame is a video frame that is last displayed before a bitstream of the first video frame is received.

In an optional implementation, the indication information is in the bitstream of the first video frame, or the indication information is in a target bitstream, and the target bitstream is a bitstream that is last received before the bitstream of the first video frame is received.

In an optional implementation, the first video frame includes at least one image unit arranged in order, a target image unit is the initial image unit in the first video frame, and the indication information is in a bitstream of the target image unit.

In an optional implementation, the target image unit may be an image slice (slice), an image tile (tile), or a plurality of image blocks, for example, a group of image blocks (for example, a macroblock in H.264 and a largest coding block in H.265).

In an optional implementation, the indication information is in header information of base layer image data of the bitstream of the target image unit, where the header information is at a network abstraction layer corresponding to the bitstream of the target image unit.

In an optional implementation, the header information is in header information of the network abstraction layer; or the header information is in a subject of the network abstraction layer and is in slice header information of the target image unit.

In an optional implementation, timing of a target bitstream is later than timing of a bitstream of the second video frame.

In an optional implementation, the display condition includes one or both of the following: determining that bitstreams of all image units in the first video frame are received; or determining that the first video frame meets a quality condition.

In an optional implementation, the quality condition includes one or both of the following: in the received bitstreams of all the image units in the first video frame, an amount of enhancement layer image data included in a bitstream of each of the image units is greater than or equal to a preset amount threshold; or a bitstream of each of the image units includes at least one quantization parameter, and the quantization parameter is less than a preset parameter threshold.

In an optional implementation, the processor 401 may be configured to: if the indication information does not include the first identifier, after receiving a bitstream of any image unit in the first video frame, display a reconstructed image of the any image unit based on the bitstream of the any image unit.

In an optional implementation, if the indication information includes the first identifier, for the bitstream of the any image unit in the first video frame, the processor 401 may be configured to determine that the bitstream of the any image unit meets a feedback condition. The transceiver 403 sends feedback information corresponding to the any image unit. The feedback condition is that an amount of enhancement layer image data included in the bitstream of the any image unit is greater than or equal to the preset amount threshold.

For concepts, explanations, detailed descriptions, and other steps with respect to the video frame processing device 400 that are related to the technical solutions provided in embodiments of this application, refer to the descriptions of the content in the foregoing methods or other embodiments. Details are not described herein again.

FIG. 11 is another diagram of a structure of a video frame processing device according to an embodiment of this application. As shown in FIG. 11, a video frame processing device 500 may include a processing module 501 and a transceiver module 502. It should be understood that division of units of the video frame processing device 500 is merely logical function division. In actual implementation, all or some of the units may be integrated into one physical entity, or may be physically separated. In this embodiment of this application, the transceiver module 502 may be implemented by the transceiver 403 in FIG. 10, and the processing module 501 may be implemented by the processor 401 in FIG. 10.

The video frame processing device 500 can correspondingly implement the steps performed by a transmit end side and/or a receive end side in the foregoing method embodiments. For example, the video frame processing device 500 may be a transmit end, or may be a component (for example, a chip or a circuit) used in the transmit end.

For concepts, explanations, detailed descriptions, and other steps with respect to the video frame processing device 500 that are related to the technical solutions provided in embodiments of this application, refer to the descriptions of the content in the foregoing methods or other embodiments. Details are not described herein again. It can be understood that, for functions of the modules in the video frame processing device 500, reference may be made to implementations of corresponding method embodiments. Details are not described herein again.

An embodiment of this application further provides a video system. The video system includes a video frame processing device configured to perform a solution on a transmit end side and a video frame processing device configured to perform a solution on the receive end side, or may further include more video frame processing devices in the solution on the transmit end side or the receive end side.

It should be understood that the video frame processing device may be a chip. The processor may be implemented by hardware, or may be implemented by software. When implemented by the hardware, the processor may be a logic circuit, an integrated circuit, or the like. When implemented by the software, the processor may be a general-purpose processor. The general-purpose processor is implemented by reading software code stored in a memory. The memory may be integrated into the processor, may be located outside the processor, or may exist independently.

This application further provides a computer program product. The computer program product includes a computer program code. When the computer program code is run on a computer, the computer is enabled to perform the method in any one of embodiments shown in FIG. 4, FIG. 7, and FIG. 8.

According to the method provided in embodiments of this application, this application further provides a computer-readable storage medium. The computer-readable medium stores program code. When the program code is run on a computer, the computer is enabled to perform the method in any one of embodiments shown in FIG. 4, FIG. 7, and FIG. 8.

It should be understood that, the terms "system" and "network" may be used interchangeably in embodiments of this application. "At least one" means one or more, and "a plurality of means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one item (piece) of the following" or a similar expression thereof means any combination of these items, including a singular item (piece) or any combination of plural items (pieces). For example, at least one (piece) of a, b, or c may represent: a, b, c, a and b, a and c, b and c, or a, b, and c, where a, b, and c may be singular or plural.

In addition, unless otherwise stated, ordinal numbers such as "first" and "second" in embodiments of this application are for distinguishing between a plurality of objects, but are not intended to limit an order, timing, priorities, or importance of the plurality of objects. For example, first information and second information are merely used to distinguish between different indication information, and do not indicate different priorities, importance, or the like of the two types of information.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

In addition, the term "for example" in embodiments of this application is used to represent an example or a description. Any embodiment or implementation solution described as an "example" in embodiments of this application should not be explained as being more preferred than another embodiment or implementation solution. That is, using the word "example" is intended to describe a concept in a specific manner.

All or some of the methods in embodiments of this application may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on the computer, the procedure or functions according to embodiments of the present invention are all or partially generated. The computer may be a general-purpose computer, a special-purpose computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD for short)), a semiconductor medium (for example, an SSD), or the like.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

In addition, the term "for example" in embodiments of this application is used to represent an example or a description. Any embodiment or implementation solution described as an "example" in embodiments of this application should not be explained as being more preferred than another embodiment or implementation solution. That is, using the word "example" is intended to describe a concept in a specific manner.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A video frame processing method, wherein the method comprises:
detecting whether a first video frame is a scene switching frame; and
if the first video frame is the scene switching frame, keeping displaying a second video frame, and after determining that the first video frame meets a preset display condition, switching from displaying the second video frame to displaying the first video frame, wherein the second video frame is a video frame that is last displayed before a bitstream of the first video frame is received.

2. The method according to claim 1, wherein the detecting whether a first video frame is a scene switching frame comprises:
receiving indication information; and
detecting whether the indication information comprises a first identifier, wherein the first identifier indicates whether the first video frame is the scene switching frame.

3. The method according to claim 2, wherein the indication information is in the bitstream of the first video frame, or the indication information is in a target bitstream, and the target bitstream is a bitstream that is last received before the bitstream of the first video frame is received.

4. The method according to any one of claims 1 to 3, wherein the first video frame comprises at least one image unit arranged in order, a target image unit is the initial image unit in the first video frame, and the indication information is in a bitstream of the target image unit.

5. The method according to claim 4, wherein
the target image unit is an image slice (slice) or an image tile (tile); or
the target image unit comprises a plurality of image blocks.

6. The method according to claim 4 or 5, wherein the indication information is in header information of base layer image data of the bitstream of the target image unit, wherein the header information is at a network abstraction layer corresponding to the bitstream of the target image unit.

7. The method according to claim 6, wherein
the header information is in header information of the network abstraction layer; or
the header information is in a subject of the network abstraction layer and is in slice header information of the target image unit.

8. The method according to claim 1, wherein timing of a target bitstream is later than timing of a bitstream of the second video frame.

9. The method according to any one of claims 1 to 8, wherein the display condition comprises one or both of the following:
determining that bitstreams of all image units in the first video frame are received; or
determining that the first video frame meets a quality condition.

10. The method according to claim 9, wherein the quality condition comprises one or both of the following:
in the received bitstreams of all the image units in the first video frame, an amount of enhancement layer image data comprised in a bitstream of each of the image units is greater than or equal to a preset amount threshold; or
a bitstream of each of the image units comprises at least one quantization parameter, and the quantization parameter is less than a preset parameter threshold.

11. The method according to any one of claims 1 to 10, wherein the method further comprises:
if the first video frame is not the scene switching frame, after receiving a bitstream of any image unit in the first video frame, displaying a reconstructed image of the any image unit based on the bitstream of the any image unit.

12. The method according to any one of claims 1 to 11, wherein if the first video frame is the scene switching frame, the method further comprises:
performing the following operation for the bitstream of the any image unit in the first video frame:
after determining that the bitstream of the any image unit meets a feedback condition, sending feedback information corresponding to the any image unit, wherein the feedback condition is that an amount of enhancement layer image data comprised in the bitstream of the any image unit is greater than or equal to the preset amount threshold.

13. A video frame processing method, wherein the method comprises:
determining whether a to-be-processed first video frame is a scene switching frame; and
if the first video frame is the scene switching frame, sending indication information, wherein the indication information comprises a first identifier, and the first identifier indicates that the first video frame is the scene switching frame.

14. The method according to claim 13, wherein the indication information is in a bitstream of the first video frame, or the indication information is in a target bitstream, and the target bitstream is a bitstream that is last sent before the bitstream of the first video frame is sent.

15. The method according to claim 13, wherein the first video frame comprises at least one image unit arranged in order, a target image unit is the initial image unit in the first video frame, and the indication information is in a bitstream of the target image unit.

16. The method according to claim 15, wherein
the image unit is an image slice (slice) or an image tile (tile); or
the image unit comprises a plurality of image blocks.

17. The method according to claim 15, wherein header information of base layer image data of the bitstream of the target image unit comprises the indication information, wherein the header information is at a network abstraction layer corresponding to the bitstream of the target image unit.

18. The method according to claim 17, wherein
the header information is in header information of the network abstraction layer; or
the header information is in a subject of the network abstraction layer and is in slice header information of the target image unit.

19. The method according to claim 15 or 16, wherein
if the first video frame is the scene switching frame, a bitstream of each image unit in the first video frame comprises base layer image data and a first amount of enhancement layer image data, wherein the first amount is preset; or
if the first video frame is not the scene switching frame, a bitstream of each image unit comprises base layer image data and a second amount of enhancement layer image data, wherein the second amount is determined based on channel quality.

20. The method according to any one of claims 15 to 19, wherein the indication information is in a bitstream of the first video frame; and
the sending indication information further comprises:
sending a bitstream of a first image unit, wherein in any two image units that are adjacent in order in the arrangement, a former image unit is the first image unit, and a latter image unit is a second image unit; and
sending a bitstream of the second image unit if first feedback information corresponding to the first image unit is detected, wherein the first feedback information represents that an amount of enhancement layer image data comprised in the bitstream that is of the first image unit and that is received by a receive end is greater than or equal to a preset amount threshold.

21. The method according to claim 20, wherein the method further comprises:
if the first feedback information is not detected within preset duration since the bitstream of the first image unit is sent, repeatedly sending the bitstream of the first image unit until the first feedback information is detected; or
if the first feedback information is not detected within preset duration since the bitstream of the first image unit is sent, sending the bitstream of the second image unit; and resending the bitstream of the first image unit after a bitstream of the last image unit in the first video frame is sent.

22. A video frame processing device, comprising a processor and a memory coupled to the processor, wherein the processor invokes program code stored in the memory to perform the method according to any one of claims 1 to 21.

23. A video system, comprising a first device and a second device, wherein
the first device is configured to perform the method according to any one of claims 1 to 12; and
the second device is configured to perform the method according to any one of claims 13 to 21.

24. A computer-readable storage medium, wherein the computer-readable storage medium stores a computer program; and when the computer program is run on a computer, the computer is enabled to perform the method according to any one of claims 1 to 21.

25. A chip, wherein the chip is coupled to a memory, and the chip reads a computer program stored in the memory, to perform the method according to any one of claims 1 to 21.
